Europäisches Patentamt
European Patent Office
Office européen des brevets

(19)

(11) Publication number: **0 197 310 A2**

(12) # EUROPEAN PATENT APPLICATION

(21) Application number: 86103014.6

(22) Date of filing: 06.03.86

(51) Int. Cl.[4]: C 08 F 10/00
C 08 F 4/64

(30) Priority: 07.03.85 JP 45662/85
18.03.85 JP 53849/85
19.03.85 JP 54838/85

(43) Date of publication of application: 15.10.86 Bulletin 86/42

(84) Designated Contracting States: BE DE FR GB NL

(71) Applicant: MITSUBISHI PETROCHEMICAL CO., LTD.
5-2, 2-chome, Marunouchi
Chiyoda-ku Tokyo 100(JP)

(72) Inventor: Matsuura, Mitsuyuki
Mitsubishi Petrochemical Co. Ltd. Jushi Kenkyusho
1, Toho-Cho Yokkaichi-Shi Mie-Ken(JP)

(72) Inventor: Fujita, Takashi
Mitsubishi Petrochemical Co. Ltd. Jushi Kenkyusho
1, Toho-Cho Yokkaichi-Shi Mie-Ken(JP)

(74) Representative: Hassler, Werner, Dr.
Postfach 17 04 Asenberg 62
D-5880 Lüdenscheid(DE)

(54) **Catalyst components for polymerizing olefins.**

(57) A catalyst component for polymerizing olefins, characterized by a contact product of the following components ($A_1$), ($A_2$) and ($A_3$);

component ($A_1$): a contact product of, as essential components, a magnesium dihalide such as $MgCl_2$, a titanium tetraalkoxide such as $Ti(On\text{-}Bu)_4$ and/or a polymer thereof, and a polymeric silicone compound having the structure represented by the formula:

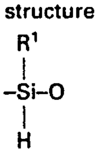

(wherein $R^1$ denotes a hydrocarbon residue) such as methylhydropolysiloxane,

component ($A_2$): an acid halide compound such as COCl COCl ortho -$C_6H_4$ $(COC1)_2$, and

component ($A_3$): a liquid titanium compound such as $TiC1_4$ (component (a)) and/or a halogenosilicon compound such as $SiC1_4$ (component (b)), provided that the component (a) contains a halogen when the component (a) is used alone.

EP 0 197 310 A2

Croydon Printing Company Ltd.

# CATALYST COMPONENTS FOR POLYMERIZING OLEFINS

## BACKGROUND OF THE INVENTION

### Field of the Invention

This invention relates to a transition metal or solid component of a Ziegler type catalyst, which has a high activity and provides a polymer excellent in polymer properties.

Hitherto, it has been known that a highly active catalyst can be obtained by using, as a carrier of transition metal compounds such as titanium compounds, a complex of a magnesium compound such as a magnesium halide, a magnesium oxyhalide, a dialkylmagnesium, an alkylmagnesium halide, a magnesium alkoxide or a dialkylmagnesium with an organoaluminum. Numbers of such inventions have been proposed.

According to these prior art, the polymers produced by using such catalyst do not have satisfactory polymer properties, although the activity itself of the catalyst is considerably high. Thus, improvement of the catalyst has been desired. Polymer properties are significantly important in slurry polymerization, gas phase polymerization and the like. When polymer properties are poor, the polymer is apt to adhere to a polymerization tank, is difficult to be taken out of the polymerization tank, and the like. Moreover, the concentration of a polymer in a polymerization vessel has a close relation with the polymer properties thereof. When the polymer properties are poor, the concentration of the polymer in the tank cannot be raised. It is very disadvantageous in view of inductrial production that polymer concentraion cannot be increased to a high value.

In addition, according to many prior processes for producing catalyst components, a large amount of transition metal components are used. Thus, the processes are inferior in the so-called "unit of

transition metal components", which is extremely inconvenient in producing a catalyst. Namely, it is necessary to remove from a catalyst component a large amount of transition metal components which are not included in the catalyst component. Thus, large amounts of solvents and the like are needed, which result in increasing the production cost of the catalyst. Moreover, it is also necessary to subject unnecessary transition metal components to decomposition treatment. In the decomposition treatment, there often occurs generation of halogen gases, hydrogen halides, etc., which is quite undesirable in view of environmental polution. Thus, it has been desired to increase the production unit of transition metal components.

Most of the above mentioned highly active catalysts exhibit a decay type polymerization velocity pattern in comparison with conventional non-carrier type catalysts. Namely, in the attenuation type polymerization, polymerization velocity is high at the starting of polymerization and then decreases with the progress of polymerization. Such polymerization pattern causes various problems with respect to stabilization of polymerization, decrease of activity in a long period polymerization and the like. Thus, it has been desired to develop a catalyst which has a high activity and exhibits a polymerization velocity pattern other than attenuation type.

Prior Art

In Japanese Patent Publication No. 37195/1976, there is proposed a method for reacting a magnesium halide or the like with a titanium tetraalkoxide and then with an organoaluminum halide. In Japanese Laid-open Patent Specification No. 16393/1979 Gazette, there is proposed a method for reacting magnesium halides and then reacting a halogen-containing compound with a reducing compound. In the case where an olefin such

as ethylene is polymerized by using a catalyst produced according to these methods, the resulting polymer is not satisfactory in polymer properties although the catalyst exhibits a certain degree of activity.

On the other hand, Ziegler type catalysts are well known as a catalyst for stereoregular polymerization of olefins. It is also well known that various methods are proposed to further improve the activity and stereoregulating property thereof.

Of these various improved methods, a method which brings about remarkable effects particularly in improvement of activity comprises introducing a magnesium compound to a solid component (Japanese Patent Publication Nos. 12105/1964, 41676/1972 and 46269/1972). However, it is also known that in the case where an olefin such as propylene is polymerized by using a catalyst produced by these methods, the stereoregularity of the resulting polymer is markedly lowered to substantially lose the practical value thereof as a catalyst for stereoregular polymerization of olefins although the catalyst exhibits a very high activity value.

Thus, various methods are proposed for increasing stereoregularity of the polymer produced by polymerizing an olefin by using a Ziegler type catalyst which contains a magnesium compound (Japanese Laid-open Patent Specification Nos. 9842/1972, 126590/1975, 57789/1976, etc.).

These methods are commonly characterized in that an electron donor such as an ester or an amine is further added to a solid catalyst component which contains a titanium compound and a magnesium halogen compound.

On the other hand, there are also known methods in which a silicon compound, an alcohol or the like is added as a third additive to a solid catalyst components in addition to an electron donor. (Japanese

Laid-open Patent Specification Nos. 108385/1975, 100596 /1977, and 104593/1977, etc.).

By these methods, the activity of a catalyst and the stereoregularity of the resulting polymer are considerably improved. However, the steps of de-catalyzation from the resulting polymer and extraction of amorphous polymer cannot be avoided. Moreover, the resulting polymer is not satisfactory in polymer properties. Furthermore, holding of the catalyst activity as mentioned above is not sufficient.

## SUMMARY OF THE INVENTION

An object of the present invention is to solve the above described problems, which object can be achieved by using a transition metal catalyst component prepared in a specified manner.

Thus, the catalyst component for polymerizing olefins according to the present invention comprises a contact product of the following components ($A_1$), ($A_2$) and ($A_3$):

Component ($A_1$): a contact product of, as essential componnets, a magnesium dihalide, a titanium tetraalkoxide and/or a polymer thereof, and a polymeric silicone compound having the structure represents by the formula:

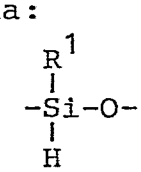

(wherein $R^1$ denotes a hydrocarbon residue),

Component ($A_2$): an acid halide compound, and

Component ($A_3$): a liquid titanium compound (component (a)) and/or a halogenosilicon compound (component (b)), provided that the component (a) contains a halogen when the component (a) is used alone.

By using, as a transition metal component of a Ziegler catalyst, the solid catalyst component according to the present invention for polymerization of an olefin, there can be obtained a polymer having high

activity and excellent polymer properties. For example, with respect to bulk specific gravity of polymer which is one of the measures of polymer propertis, there can be obtained a polymer having a bulk specific gravity of 0.40 (g/cc) or more and, in some cases, a polymer having 0.45 (g/cc) or more.

Another advantage brought about by using the solid catalyst component according to the invention is that polymerization velocity pattern can be controlled. Generally, if polymerization is conducted by using a highly active catalyst, there is often observed an attenuation type polymerization wherein the activity is high at the initial stage of the polymerization and thereafter decreases. Such attenuation type polymerization is not preferred because the function of the catalyst sometimes can not be fully exhibit under some polymerization conditions. By using the solid catalyst component according to the present invention, the activity at the initial polymerization stage can be suitably depressed to conduct the so-called holding type polymerization.

## DETAILED DESCRIPTION OF THE INVENTION

### Catalyst Component

The catalyst component according to the invention is a contact product of the following components ($A_1$), ($A_2$) and ($A_3$).

Component ($A_1$)

(1) Composition

The component ($A_1$) is a solid composition comprising a magnesium dihalogenide, a titanium tetraalkoxide and/or a polymer thereof, and a specified polymeric silicone compound.

The solid composition ($A_1$) is not a complex of a magnesium dihalogenide, a titanium tetraalkoxide and/or a polymer thereof, but a different solid. The details thereof are not fully clarified at present. According to a result of the compositional analysis

0197310

thereof, however, this solid composition contains titanium, magnesium, halogens and silicon.

The component ($A_1$) can contain, as necessary, a small amount of an alcohol and/or an organic acid ester in addition to the above mentioned three essential components.

(2) Preparation

The component ($A_1$) can be prepared by contacting a magnesium dihalogenide, a titanium tetraalkoxide and/or a polymer thereof and a polymeric silicone compound with one another.

(a) magnesium dihalogenides

Specific examples thereof include $MgF_2$, $MgCl_2$, $MgBr_2$, etc.

(b) titanium tetraalkoxides and polymers thereof

Specific examples of the titanium tetraalkoxide include $Ti(OC_2H_5)_4$, $Ti(O\text{-}iC_3H_7)_4$, $Ti(O\text{-}nC_4H_9)_4$, $Ti(O\text{-}nC_3H_7)_4$, $Ti(O\text{-}iC_4H_9)_4$, $Ti[OCH_2CH(CH_3)_2]_4$, $Ti[OC(CH_3)_3]_4$, $Ti(O\text{-}nC_5H_{11})_4$, $Ti(O\text{-}nC_6H_{13})_4$, $Ti(O\text{-}nC_7H_{15})_4$, $Ti[OCH_2CH(C_2H_5)C_4H_9]_4$, etc. Among them, preferred are $Ti(OC_2H_5)_4$ and $Ti(O\text{-}nC_4H_9)_4$.

Specific examples of the polymer of the titanium tetraalkoxide include those represented by the formula:

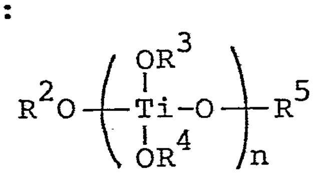

wherein: $R^2$ through $R^5$ denote the same or different hydrocarbon residue, preferably an aliphatic or aromatic hydrocarbon having 1 to 10 carbon atoms, and particularly an aliphatic hydrocarbon having 2 to 6 carbon atoms; and n denotes a number not less than 2, particularly a number up to 20. It is desirable to choose the value n so that the polymeric titanate ester itself or the solution thereof can be supplied in the form of a liquid to the procedure for contacting

it with the other components. The value n suitable for handling is in the range of approximately from 2 to 14, preferably in the range of approximately from 2 to 10. Specific examples of such polymeric titanate ester include n-butyl polytitanate (n = 2 - 10), hexyl polytitanate (n = 2 - 10), n-octylpolytitanate (n = 2 - 10), etc. Among them, n-butylpolytitanate is suitable.

(c) polymeric silicone compound

The polymeric silicone compound has a structure represented by the formula:

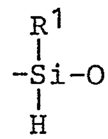

wherein, $R^1$ denotes a hydrocarbon residue having approximately 1 to 10 carbon atoms, particularly approximately 1 to 6 carbon atoms.

Specific examples of the polymeric silicone compound having such structural unit include methylhydropolysiloxane, ethylhydropolysiloxane, phenylhydropolysiloxane, cyclohexylhydropolysiloxane, 1,3,5,7-tetramethylcyclotetrasiloxane, and 1,3,5,7,9-pentamethylcyclopentasiloxane.

The polymerization degree thereof is not especially restricted. From a viewpoint of handling, however, preferred are those having a viscosity in the range of approximately 1 to 100 centistokes. Although the terminal structure of the hydropolysiloxanes does not have a large effect, the end groups thereof are preferably terminated by an inert group such as a trialkylsilyl group.

(d) auxiliary components

Small amounts of alcohols and/or organic acid esters can be used in addition to the above components (a) through (c).

The alcohols can be illustrated by mono- and dihydric alcohols having approximately 1 to 10 carbon

atoms. The organic acid esters can be illustrated by esters of the above mentioned alcohol, especially a monohydric alcohols, with a $C_1$ to $C_{10}$ aliphatic or aromatic monobasic or dibasic carboxylic acid.

(e) contact of each component

(i) molar ratio

The amount of each component can be arbitrarily chosen as long as the effects of the present invention can be exhibited. However, a molar ratio in the following range is generally preferred.

The titanium tetraalkoxide and/or the polymer thereof is suitably used in such an amount as to give the molar ratio thereof to the magnesium dihalogenide in the range of 0.1 to 10, preferably in the range of 1 to 4, and more preferably in the range of 2 to 3.

The amount of the polymeric silicone compound used is suitably such that gives the molar ratio thereof to the magnesium dihalogenide in the range of $1x10^{-2}$ to 100, preferably in the range of 0.1 to 10, and more preferably in the range of 1 to 4.

The amount of the alcohol and/or the organic acid ester, if used, is such that gives the molar ratio thereof to the magnesium dihalogenide suitably in the range of $1x10^{-3}$ to $5x10^{-1}$, preferably in the range of $5x10^{-2}$ to $3x10^{-1}$.

(ii) contacting method

The solid component ($A_1$) according to the invention is obtained by contacting the above mentioned three components (and, as necessary, auxiliary components) with one another at a time or stepwise (washing may be effected between the contact steps).

Contact of the components can be conducted by any method that is generally known. In general, the components are contacted with one another at a temperature in the range of -100°C to 200°C. Contacting time is usually about 10 minutes to about 20 hours.

Contact of each component is preferably

conducted under stirring and can be effected through mechanical pulverization by means of a ball mill, a vibration mill and the like. The order of contacting essential components is optional as far as the effects the invention can be recognized. Generally, a magnesium dihalogenide is contacted with a titanium tetraalkoxide and/or a polymer thereof to dissolve the magnesium dihalogenide therein and then a polymer silicone compound is contacted with the resulting solution to separate out a solid composition. The auxiliary components are usually incorporated simultaneously with the titanium tetraalkoxide. Contact of each component can be conducted in the presence of a dispersing agent. Examples of such dispersing agent include hydrocarbons, halogenated hydrocarbons, dialkyl siloxanes, etc. Specific examples of the hydrocarbons include hexane, heptane, toluene, cyclohexane, etc. Specific examples of the halogenated hydrocarbons include n-butyl chloride, 1,2-dichloroethylene, carbon tetrachloride, chlorobenzene, etc., and specific examples of the dialkyl polysiloxanes include dimethylpolysiloxane, methylphenylpolysiloxane, etc.

Incidentally, according to the above mentioned preferred embodiment of the contacting procedure, generally a magnesium dihalogenide is dissolved in the former contact step and a solid containing the magnesium dihalogenide is separated out in the latter contact step.

The component ($A_1$) thus prepared is desirably washed with the solvents that are previously illustrated as a dispersing agent to remove any unreacted liquid component and then contacted with the component ($A_2$), etc.

Component ($A_2$)

Any compound that is generally known as an acid halide compound can be employed.

The acid moiety in the compound is suitably an

aliphatic or aromatic mono-, di- or tribasic carboxylic acid having approximately 2 to 20 carbon atoms. In the case where the acid is a di- or poly-basic carboxylic acid, it is desirable that all the carboxylic acids are halogenated (wherein, the plural halogens contained therein may be identical or different). Representative halogen includes fluorine, chlorine, bromine and iodine.

Specific examples of such acid halide compound include the following compounds:

$CH_3COCl$, $CH_3COBr$, $C_3H_7COCl$, $C_2H_5COCl$, $C_6H_5COCl$, $CH_3(CH_2)_3CH(C_2H_5)COCl$, $CH_3(CH_2)_{16}COCl$, $C_6H_5COCl$, $C_6H_5COBr$, o-$C_6H_4(COCl)_2$, m-$C_6H_4(COCl)_2$, p-$C_6H_4(COCl)_2$, 1,2,4-$C_6H_3(COCl)_3$, cyclo-$C_6H_{10}(COCl)_2$, etc.

Component ($A_3$)

The component ($A_3$) consists of the following component (a) and/or component (b). In the case where the component (a) is used alone, the titanium compound (a) must contain a halogen. Incidentally, when the component (b) is used in combination with the component (a), the component (a) may, of course, contain a halogen.

(a) liquid titanium compound

The term "liquid" herein involves liquids in the form of solutions in addition to compounds that are liquid themselves (including the compounds that have been converted to liquid form through oxidation).

Representative compounds include the compounds represented by the general formula: $Ti(OR^6)_{4-n}Xn$ (wherein: $R^6$ denotes a hydrocarbon residue, preferably a hydrocarbon residue having approximately 1 to 10 carbon atoms; X denotes a halogen; and n denotes a number from 0 (inclusive) to 4 (inclusive), $0 \leq n \leq 4$). Specific examples thereof include $TiCl_4$, $TiBr_4$, $Ti(OC_2H_5)Br_3$, $Ti(OC_2H_5)_2Cl_2$, $Ti(OC_2H_5)_3Cl$, $Ti(O\text{-}iC_3H_7)$-$Cl_3$, $Ti(O\text{-}nC_4H_9)Cl_3$, $Ti(O\text{-}nC_4H_9)_2Cl_2$, $Ti(OC_2H_5)Br_3$, $Ti(OC_2H_5)(OC_4H_9)_2Cl$, $Ti(O\text{-}nC_4H_9)_3Cl$, $Ti(O\text{-}C_6H_5)Cl_3$,

$Ti(O-iC_4H_9)_2Cl_2$, $Ti(O-C_5H_{11})Cl_3$, $Ti(OC_6H_{13})Cl_3$, $Ti(OC_2H_5)_4$, $Ti(O-nC_3H_7)_4$, $Ti(O-iC_3H_7)_4$, $Ti(O-nC_4H_9)_4$, $Ti(O-iC_4H_9)_4$, $Ti[OCH_2CH(CH_3)_2]_4$, $Ti[O-C(CH_3)_3]_4$, $Ti(O-nC_5H_{11})_4$, $Ti(O-nC_6H_{13})_4$, $Ti(O-nC_7H_{15})_4$, $Ti[OCH(C_3H_7)_2]_4$, $Ti[OCH(CH_3)C_4H_9]_4$, $Ti(O-nC_8H_{17})_4$, $Ti(O-nC_{10}H_{21})_4$, $Ti[OCH_2CH(C_2H_5)C_4H_9]_4$, etc. Among them, $TiCl_4$ is prepared.

(b) halogenosilicon compound

As the halogenosilicon compounds, can be used the compounds represented by the general formula: $R'_{4-n}SiX_n$ (wherein: R' denotes hydrogen, a hydrocarbon residue or an alkoxy group, X denotes a halogen, and n is a number of from 1 to 4 (both inclusive), $1 \leq n \leq 4$).

Specific examples thereof include $SiCl_4$, $HSiCl_3$, $CH_3SiCl_3$, $SiBr_4$, $(C_2H_5)_2SiCl_2$, $(CH_3)_3SiCl$, $Si(OCH_3)Cl_3$, $Si(OC_2H_5)Cl_3$, $Si(OC_2H_5)_2Cl_2$, etc. Among them, $SiCl_4$ is preferred.

## Synthesis of Catalyst Component

The catalyst component according to the present invention can be prepared by contacting the components ($A_1$) through ($A_3$) with one another.

1) Molar ratio

The amount of each component can be optional as far as the effects of the invention can be exhibited. However, amounts in the following ranges are preferred.

It is desirable that the amount of the component ($A_2$) is such as to give a molar ratio of the component ($A_2$) to the magnesium dihalogenide which constitutes the component ($A_1$) in the range of $1x10^{-3}$ to 10, preferably in the range of $1x10^{-2}$ to 1.

In the case where the component ($A_3$) is a hlogenosilicon compound, it is desirable that the component ($A_3$) is used in such an amount as to give a molar ratio of the component ($A_3$) to the magnesium dihalogenide constituting the component ($A_1$) in the range of $1x10^{-2}$ to 100, preferably in the range of 0.1 to 10, and particularly preferably in the range of

0.15 to 5. In the case where the titanium compound is used as the component ($A_3$), the molar ratio of the compound to the magnesium dihalogenide is preferably in the range of 0.1 to 1.0 when the temperature at the contact is higher than 30°C, and preferably in the range of 70 - 110°C, but is preferably higher than 1.0, preferably up to 10 when the temperature of the contact is 30°C or lower, and preferably 0 - 30°C.

2) Contacting method

It is preferable to contact the components with one another in such manner as to contact the component ($A_1$) with the components ($A_2$) and ($A_3$) at a time, intermittently or stepwise (washing may be conducted between the contact steps).

It is suitable to effect the contacting procedure generally at a temperature in the range of -100°C to 200°C. In the case where the titanium compound is used as the component ($A_3$), the temperature of the contact is 0°C or higher, and preferably 30 - 100°C.

Contacting time is usually about 10 minutes to about 20 hours.

It is preferable to contact the solid component ($A_1$) with the components ($A_2$) and ($A_3$) under stirring. It is also possible to contact them by means of mechanical pulverization with using a ball mill, a vibration mill and the like. The order of contact is optional as far as the effects according to the invention can be exhibited.

It is also possible to contact the solid component ($A_1$) with the component ($A_2$) and ($A_3$) in the presence of a dispersing agent. The dispersing agent can be selected from those previously illustrated for dispersing agents in the preparation of the component ($A_1$).

The present catalyst component thus obtained is usually washed with the solvents that are previously illustrated as a dispersing agent to remove unreacted liquid components.

## Polymerization of Olefin

### Making up of Catalyst

The catalyst component according to the present invention can be used for polymerization of olefins in combination with a co-catalyst, an organometal compound. As the co-catalyst can be used any organometal compound that is known as a co-catalyst and the metal of which belongs to one of the Groups I through IV in the periodic table. Organo-aluminum compounds are particularly preferred as the co-catalyst.

Specific examples of the organoaluminum compounds are the compounds represented by the general formula:

$$R^7_{3-n}AlX_n \quad \text{or} \quad R^8_{3-m}Al(OR^9)_m$$

(wherein: $R^7$, $R^8$ and $R^9$ are identical or different and denote a hydrocarbon residue having approximately 1 to 20 carbon atoms or hydrogen; X denotes a halogen; and n and m each independently denote a number each satsifying the following expressions: $0 \leqq n \leqq 2$, $0 \leqq m \leqq 1$). Specific examples thereof include the following compounds:

(a) trialkylaluminum such as trimethylaluminum, triethylaluminum, triisobutylaluminum, trihexaylaluminum, trioctyaluminum, tridecylaluminum etc., (b) alkylaluminum halides such as diethylaluminum monochloride, diisobutylaluminum monochloride, ethylaluminum sesquichloride, ethylaluminum dichloride, etc., (c) dialkylaluminum hydrides such as diethylaluminum hydride, diisobutylaluminum hydride, etc., (d) alkylaluminum alkoxides such as diethylaluminum ethoxide, diethylaluminum butoxide, diethylaluminum phenoxide, etc.

It is possible to use the organoaluminum compounds (a) through (c) in combination with the other organometal compounds such as, for example, the alkylaluminum alkoxides represented by the formula:

$$R^{10}_{3-a}Al(OR^{11})_a$$

(wherein: a is a number from 1 to 3 (both inclusive, $1 \leqq a \leqq 3$); and $R^{10}$ and $R^{11}$ are identical or different and denote a hydrocarbon residue having approximately 1 to 20 carbon atoms). For example, the following combinations can be illustrated: triethylaluminum with diethylaluminum ethoxide; diethylaluminum monochloride with diethylaluminum ethoxide; ethylaluminum dichloride with ethylaluminum diethoxide; and triethylaluminum with diethylaluminum ethoxide and diethylaluminum chloride.

The amounts of these organometal compounds are not particularly restricted; however, it is preferable to use them in a weight ratio in the range of 0.5 to 1000 based on the weight of the solid catalyst component of the invention.

In order to improve the stereoregularity of the olefin polymers having not less than 3 carbon atoms, it is effective to add to allow coexistence, during polymerization, an electron donor compound such as an ether, an ester, an amine, or a silane compound. The amount of the electron donor compound to be used for such purpose is 0.001 to 2 mole per mole of the organoaluminum compound, preferably 0.01 to 1 mole. Specific examples of the electron donor compounds used for such purpose are disclosed in, for example, Japanese Laid-open Patent Specification Nos. 127408/1980, 139511/1981, and 63310/1982.

Olefin

The olefins to be polymerized by using the catalyst system according to the present invention are represented by the general formula:

$$R\text{-}CH{=}CH_2$$

(wherein: R denotes hydrogen atom or a hydrocarbon

residue of 1 to 10 carbon atoms, which may have a branched group).

Specific examples thereof include olefins such as ethylene, propylene, butene-1, pentene-1, hexene-1, 4-methylpentene-1 and the like. Preferred are ethylene and propylene. In the case of polymerizing ethylene or propylene, ethylene can be copolymerized with up to 50 % by weight, preferably up to 20 % by weight, of the above mentioned olefins on the basis of the ethylene whereas propylene can be copolymerized with up to 30 % by weight of the above mentioned olefins, particularly ethylene, based on the propylene. Ethylene and propylene each can also be copolymerized with other copolymerizable monomers (such as vinyl acetate and diolefins).

Polymerization

The catalyst system according to the present invention is not only applicable to conventional slurry polymerization but also to solvent-free liquid phase polymerization, solution polymerization or gas phase polymerization. The catalyst system is also applicable to continuous polymerization, batch polymerization and to a method wherein preliminary polymerization is conducted. As a polymerization solvent for the slurry polymerization, can be used a saturated aliphatic or aromatic hydrocarbon such as hexane, heptane, pentane, cyclohexane, benzene, toluene, etc. or a mixture thereof. Polymerization temperature ranges from room temperature to approximately 200°C, preferably from 50°C to 150°C. During the polymerization, hydrogen gas can be used auxiliarily as a molecular weight-regulating agent.

As mentioned above, holding-type polymerization can be conducted according to the present invention. This effect of the invention can be shown by the fact that the ratio R (= $W_1/W_2$) is not larger than 2.0, wherein: $W_1$ and $W_2$ denote amounts of the polymers produced in the first 30 minutes and in the last 30

minutes, respectively.

## EXAMPLES

### Example A1

(1) Synthesis of component ($A_1$)

Into a flask sufficiently replaced with nitrogen were introduced 100 ml of n-heptane which had been dehydrated and deoxidized, 0.1 mole of $MgCl_2$ and then 0.20 mole of $Ti(O\text{-}nBu)_4$, and the resulting mixture was subjected to reaction at 100°C for 2 hours. After termination of the reaction, the mixture was cooled to 40°C and 15 ml of methylhydrogenpolysiloxane was introduced thereto. The resulting mixture was subjected to reaction for 3 hours. After termination of the reaction, the resulting solid component was washed with n-heptane, and a portion thereof was taken out and subjected to compositional analysis with the results of Ti=15.2 % by weight and Mg=4.2 % by weight.

(2) Preparation of catalyst component

Into a flask sufficiently replaced with nitrogen were introduced 100 ml of n-heptane which had been dehydrated and deoxidized, and the component ($A_1$) synthesized above in an amount of 0.03 mol on the basis of the Mg atom contained therein. Then, 0.05 mol of $SiCl_4$ was introduced thereto over 15 minutes at 30°C and the resulting mixture was subjected to reaction at 90°C for 2 hours. After termination of the reaction, the reaction mixture was washed with purified n-heptane. Then, 25 ml of n-heptane was mixed with 0.004 mol of ortho-$C_6H_4(COCl)_2$ and the mixture was introduced to the reaction system at 50°C, followed by introduction of 0.05 mol of $SiCl_4$. The resulting mixture was subjected to reaction at 90°C for 2 hours. After termination of the reaction, the reaction product was washed with n-heptane to give a catalyst component. The content of Ti was 2.05 % by weight.

(3) Polymerization of propylene

A stainless steel autoclave having an internal

volume of 1.5 liters and equipped with a stirrer and a temperature regulator was repeatedly subjected to vacuum and propylene replacement several times. Thereto were introduced 500 ml of n-heptane which had been sufficiently dehydrated and deoxidized, 125 mg of triethylaluminum, 53.6 mg of diphenyldimethoxysilane, and 15 mg of the catalyst component as prepared above, followed by introduction of 60 ml of $H_2$. The temperature and pressure of the reaction system were raised and polymerization was effected under the following conditions: polymerization pressure = 5 kg/cmG, polymerization temperature = 75°C, and polymerization time = 2 hours. After termination of the polymerization, the resulting polymer slurry was isolated by filtration and the polymer was dried.

Thus, 51.4 g of polymer was obtained. On the other hand, 1.1 g of polymer was obtained from the filtrate. According to a boiling heptane extraction test, total product I.I. (hereinafter, referred to as T-I.I.) was 95.8 % by weight. MFR was 9.6 (g/10 min.) and bulk specific gravity of the polymer was 0.435 (g/cc).

Example A2

(1) Synthesis of component ($A_1$)

Into a flask sufficiently replaced with nitrogen were introduced 100 ml of n-heptane which had been dehydrated deoxidized, 0.1 mol of $MgCl_2$, 0.195 mol of $Ti(O\text{-}nBu)_4$, and then 0.007 mol of $n\text{-}C_4H_9OH$, and the resulting mixture was subjected to reaction at 90°C for 2 hours. After termination of the reaction, the mixture was cooled to 40°C, and 15 ml of methylhydrogenpolysiloxane (of 20 centistokes in viscosity) was introduced thereto. The resulting mixture was subjected to reaction for 3 hours. The resulting solid component was washed with n-heptane, and a portion thereof was taken out and subjected to compositional analysis with the results of Ti=14.2 % by weight and Mg=4.3 % by weight.

(2) Preparation of catalyst component

Into a flask sufficiently replaced with nitrogen were introduced 100 ml of n-heptane which had been dehydrated and deoxidized, and the component ($A_1$) synthesized above in an amount of 0.03 mol on the basis of the Mg atom contained therein. Then, 0.075 mol of $SiCl_4$ was introduced thereto over 15 minutes at 30°C and the resulting mixture was subjected to reaction at 90°C for 2 hours. After termination of the reaction, the reaction mixture was washed with purified n-heptane. Then, 25 ml of n-heptane was mixed with 0.004 mol of ortho-$C_6H_4(COCl)_2$ and the mixture was introduced to the reaction system at 70°C over 30 minutes. The resulting mixture was subjected to reaction at 90°C for 2 hours. After termination of the reaction, the reaction product was washed with n-heptane to give a catalyst component. A portion thereof was taken out and subjected to compositional analysis with the result of Ti=2.21 % by weight.

(3) Polymerization of propylene

The polymerization procedures in Example A1 were repeated except that 52 mg of phenyltriethoxysilane was used in place of 53.6 mg of the diphenyldimethoxysilane. Thus, 84.6 mg of a polymer was obtained. The polymer had the following values: T-I.I. = 96.4 % by weight, bulk specific gravity of the polymer = 0.45 (g/cc), and MFR = 7.1 (g/10 min.).

Examples A3

(1) Synthesis of catalyst component

Into a flask sufficiently replaced with nitrogen was introduced 0.03 mol, on the basis of the Mg atom, of the component ($A_1$) produced similarly as in Example 1. Then, 0.075 mol of $SiCl_4$ was introduced thereto at 30°C over 15 minutes and the resulting mixture was subjected to reaction at 80°C for 2 hours. After termination of the reaction, the reaction mixture was washed with purified n-heptane. Then, 15 ml of n-heptane was

mixed with 0.003 mol of ortho-$C_6H_4(COCl)_2$ and the mixture was introduced to the reaction system. The reaction system was subjected to reaction at 70°C for 1 hour. Then, 0.075 mol of $SiCl_4$ was introduced thereto at 30°C and the resulting reaction mixture was subjected to reaction at 90°C for 3 hours. After termination of the reaction, the reaction product was washed with n-heptane to give a catalyst component. The content of Ti was 2.26 % by weight.

(2) Polymerization of propylene

Polymerization was conducted in the same way as in Example A1 except that the amount of diphenyldimethoxysilane was changed to 26.8 mg. Thus, 106.2 g of a polymer was obtained. The polymer had the following values: T-I.I. = 95.1 % by weight, bulk specific gravity of the polymer = 0.43 (g/cc), and MFR = 6.6 (g/10 min.).

Example A4

(1) Synthesis of catalyst component

Into flask sufficiently replaced with nitrogen was introduced 0.03 mol, on the basis of the Mg atom, of the component ($A_1$) produced similarly as in Example A1. Then, 0.05 mol of $SiCl_4$ was introduced thereto at 30°C over 1 hour and the resulting mixture was subjected to reaction at 90°C for 4 hours. After termination of the reaction, the reaction mixture was washed with purified n-heptane. Then, 15 ml of n-heptane was mixed with 0.003 mol or ortho-$C_6H_4(COCl)_2$ and 0.01 mol of $SiCl_4$ and the mixture was introduced at 70°C over 0.5 hour to the reaction system. The reaction system was subjected to reaction at 90°C for 1 hour. The reaction mixture, after the reaction, was washed with n-heptane. Then, 0.01 mol of $SiCl_4$ was introduced thereto at 30°C and the resulting reaction mixture was subjected to reaction at 100°C for 6 hours. After termination of the reaction, the reaction product was washed with n-heptane to give a catalyst component. The content of

Ti was 1.26 % by weight.

(2) Polymerization of propylene

Polymerization was conducted in the same way as in Example A1 except that the amount of diphenyldimethoxysilane was changed to 26.8 mg. Thus, 181 g of a polymer was obtained. The polymer had the following values: T-I.I. = 98.8 % by weight, bulk specific gravity of the polymer = 0.47 (g/cc), and MFR = 6.4 (g/10 min.). The ratio R was 1.5.

Example B1

(1) Synthesis of component ($A_1$)

Into a flask sufficiently replaced with nitrogen were introduced 100 ml of n-heptane which had been dehydrated and deoxidized, 0.1 mol of $MgCl_2$ and then 0.20 mol of $Ti(O\text{-}nBu)_4$, and the resulting mixture was subjected to reaction at 95°C for 2 hours. After termination of the reaction, the mixture was cooled to 40°C and 15 ml of methylhydrogenpolysiloxane was introduced thereto. The resulting mixture was subjected to reaction for 3 hours. After termination of the reaction, the resulting solid component was washed with n-heptane, and a portion thereof was taken out and subjected to compositional analysis with the results of Ti = 15.2 % by weight and Mg = 4.2 % by weight.

(2) Preparation of catalyst component

Into a flask sufficiently replaced with nitrogen were introduced 100 ml of n-heptane which had been dehydrated and deoxidized, and the component ($A_1$) synthesized above in an amount of 0.03 mol on the basis of the Mg atom contained therein. Then, 0.05 mol of $SiCl_4$ was introduced thereto over 15 minutes at 30°C and the resulting mixture was subjected to reaction at 90°C for 2 hours. After termination of the reaction, the reaction mixture was washed with purified n-heptane. Then, 25 ml of n-heptane was mixed with 0.004 mol of ortho-$C_6H_4(COCl)_2$ and the mixture was introduced to the reaction system at 70°C over 30 minutes. The resulting

mixture was subjected to reaction at 90°C for 1 hour. After termination of the reaction, the reaction product was washed with purified n-heptane. Then, 25 ml of $TiCl_4$ was introduced thereto and the resulting mixture was subjected to reaction at 30°C for 6 hours. After termination of the reaction, the reaction product was washed with n-heptane to give a catalyst component. The content of Ti was 3.65 % by weight.

(3) Polymerization of propylene

Into a stainless steel autoclave having an internal volume of 1.5 liters and equipped with a stirrer and a temperature regulator were introduced 500 ml of n-heptane which had been sufficiently dehydrated and deoxidized, 125 mg of triethylaluminum, 26.8 mg of diphenyldimethoxysilane, and 15 mg of the catalyst component as prepared above, followed by introduction of 60 ml of $H_2$. The temperature and pressure of the reaction system were raised and polymerization was effected under the following conditions: polymerization pressure = 5 kg/cmG, polymerization temperature = 75°C, and polymerization time = 2 hours. After termination of the polymerization, the resulting polymer slurry was isolated by filtration and the polymer was dried.

Thus, 163 g of polymer was obtained. On the other hand, 0.9 g of polymer was obtained from the filtrate. According to a boiling heptane extraction test, total product I.I. (hereinafter, referred to as T-I.I.) was 98.2 % by weight. MFR was 4.3 (g/10 min.) and bulk specific gravity of the polymer was 0.440 (g/cc).

The ratio (R) of the amount of polymer produced in the first 30 minutes to that in the last 30 minutes was 1.7 according to the polymerization velocity pattern thereof.

<u>Comparative Example B1</u>

The procedures in the preparation of catalyst

component in Example B1 were repeated except that the reaction with $TiCl_4$ was effected at 70°C. The Ti content of the resulting catalyst component was 2.89 % by weight. Also, propylene was polymerized in the same way. Thus, was obtained 182 g of polymer having the following values: T-I.I. = 98.1 % by weight, MFR = 3.7 (g/10 min.), and bulk specific gravity of the polymer = 0.438 (g/cc). The ratio R was 2.5.

Example B2

(1) Synthesis of catalyst component

The component ($A_1$) synthesized similarly as in Example 4 was introduced into a flask as in Example 4.

Thereto was introduced 0.05 mol of $SiCl_4$ at 30°C over 1 hour and the content of the flask was subjected to reaction at 90°C for 2 hours. After termination of the reaction, the reaction mixture was washed with n-heptane. Then, 25 ml of n-heptane was mixed with 0.005 mol of ortho-$C_6H_4(COCl)_2$ and the mixture was introduced to the flask. The content of the flask was subjected to reaction at 90°C for 1 hour. After termination of the reaction, the reaction mixture was washed with n-heptane and then 25 ml of $TiCl_4$ was introduced thereto. The resulting mixture was subjected to reaction at 20°C for 6 hours. After termination of the reaction, the reaction produce was washed with n-heptane to give a catalyst component.

The Ti content thereof was 3.85 % by weight.

(2) Polymerization of propylene

Polymerization was effected in the same way as in Example B1 except that 26 mg of phenyltriethoxysilane was used in place of the diphenyldimethoxysilane. Thus, 126.2 g of polymer was obtained. The polymer exhibited the following values: T-I.I. = 97.9 % by weight, bulk specific gravity of the polymer = 0.457 (g/cc), and MFR = 6.1 (g/10 min.). The ratio R was 1.5.

Example B3

(1) Preparation of catalyst component

A catalyst component was prepared in the same way as in Example 4 except that 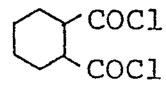 was used instead of the ortho-$C_6H_4(COCl)_2$. The Ti content of the resulting catalyst component was 3.82 % by weight.

(2) Polymerization of propylene

Polymerization was effected in the same way as in Example B1 except that 43.4 mg of monophenyltrimethoxysilane was used in place of the diphenyldimethoxysilane. Thus, 82.4 g of polymer was obtained. The polymer had the following values: T-I.I. = 95.3 % by weight, MFR = 5.8 (g/10 min.), and bulk specific gravity of the polymer = 0.431 (g/cc). The ratio R was 1.6.

Example B4

(1) Preparation of catalyst component

A catalyst component was prepared in the same way as in Example B1 except that $C_6H_5COCl$ was used instead of the ortho-$C_6H_4(COCl)_2$. The Ti content of the resulting catalyst component was 3.31 % by weight.

(2) Polymerization of propylene

The polymerization procedures in Example B1 were repeated except that the amount of the diphenyldimethoxysilane was changed to 53.6 mg. Thus, 79.6 g of polymer was obtained. The polymer had the following values: T-I.I. = 94.6 % by weight, MFR = 6.2 (g/10 min.), and bulk specific gravity of the polymer = 0.422 (g/cc). The ratio R was 1.7.

Example C1

(1) Synthesis of component ($A_1$)

Into a flask sufficiently replaced with nitrogen were introduced 100 ml of n-heptane which has been dehydrated and deoxidized, 0.1 mol of $MgCl_2$ and then 0.2 mol of $Ti(O\text{-}nC_4H_9)_4$, and the resulting mixture was subjected to reaction at 95°C for 2 hours. After

termination of the reaction, the mixture was cooled to 40°C and 15 ml of methylhydrogenpolysiloxane was introduced thereto. The resulting mixture was subjected to reaction for 3 hours. After termination of the reaction, the resulting solid component was washed with n-heptane, and a portion thereof was taken out and subjected to compositional analysis with the results of Ti = 15.2 % by weight and Mg = 4.2 % by weight.

(2) Preparation of catalyst component

Into a flask sufficiently replaced with nitrogen were introduced 100 ml of n-heptane which had been dehydrated and deoxidized, and the component ($A_1$) synthesized above in an amount of 0.03 mol on the basis of the Mg atom contained therein. Then, 0.05 mol of $SiCl_4$ was introduced thereto over 15 minutes at 30°C and the resulting mixture was subjected to reaction at 90°C for 2 hours. After termination of the reaction, the reaction mixture was washed with purified n-heptane. Then, 25 ml of n-heptane was mixed with 0.004 mol or ortho-$C_6H_4(COCl)_2$ and the mixture was introduced to the reaction system at 70°C over 30 minutes. The resulting mixture was subjected to reaction at 90°C for 1 hour. After termination of the reaction, the reaction mixture was washed with purified n-heptane. Thereto was introduced 1 ml of $TiCl_4$ (Ti/Mg = 0.31 (molar ratio)) and the resulting mixture was subjected to reaction at 100°C for 6 hours. After termination of the reaction, the reaction product was washed with n-heptane to give a catalyst component.

The content of Ti was 3.05 % by weight.

(3) Polymerization of propylene

Into a stainless steel autoclave having an internal volume of 1.5 liters and equipped with a stirrer and a temperature regulator were introduced 500 ml of n-heptane which had been sufficiently dehydrated and deoxidized, 125 mg of triethylaluminum,

26.8 mg of diphenyldimethoxysilane, and 15 mg of the catalyst component as prepared above, followed by introduction of 60 ml of $H_2$. The temperature and pressure of the reaction system were raised and polymerization was effected under the following conditions: polymerization pressure = 5 kg/cmG, polymerization temperature = 75°C, and polymerization time = 2 hours. After termination of the polymerization, the resulting polymer slurry was isolated by filtration and the polymer was dried.

Thus, 166.2 g of polymer was obtained. On the other hand, 1.2 g of polymer was obtained from the filtrate. According to a boiling heptane extraction test, total product I.I. (hereinafter, referred to as T-I.I.) was 97.9 % by weight. MFR was 5.3 (g/10 min.) and bulk specific gravity of the polymer was 0.441 (g/cc).

The ratio R of the polymer amounts in the first 30 minutes to that in the last 30 minutes determined accoding to the polymerization velocity pattern was 1.6.

Comparative Example C2

The procedures in the preparation of the catalyst component in Example C1 were repeated except that $TiCl_4$ was used in an amount of 15 ml (Mg/Ti = 4.6 (molar ratio)). Also, propylene was polymerized in the same way as in Example C1. Thus, 177 g of polymer was obtained. The polymer had the following values: T-I.I. = 98.0 % by weight, MFR = 3.7 (g/10 min.), and bulk specific gravity of the polymer = 0.431 (g/cc). The ratio R was 2.4.

Example C2

(1) Synthesis of catalyst component

The component ($A_1$) synthesized similarly as in Example C1 was introduced into a flask as in Example 8. Thereto was introduced 0.05 mol of $SiCl_4$ at 30°C over 1 hour and the content of the flask was subjected to

reaction at 90°C for 2 hours. Then, 25 ml of n-heptane was mixed with 0.005 mol of ortho-$C_6H_4(COCl)_2$ and the mixture was introduced into the flask at 70°C over 30 minutes. The content of the flask was subjected to reaction at 90°C for 1 hour. After termination of the reaction, the reaction mixture was washed with n-heptane. Then, 0.5 ml of $TiCl_4$ (Ti/Mg = 0.15 (molar ratio)) was introduced thereto and the resulting mixture was subjected to reaction at 100°C for 6 hours. After termination of the reaction, the reaction product was washed with n-heptane to give a catalyst component.

The Ti content thereof was 3.38 % by weight.

(2) Polymerization of propylene

The polymerization procedures in Example C1 were repeated except that 26 mg of phenyltriethoxysilane was used instead of the diphenyldimethoxysilane. Thus, 101 g of polymer was obtained. The polymer had the following values: T-I.I. = 97.5 % by weight, MFR = (g/10 min.), and bulk specific gravity of the polymer = 0.461 (g/cc). The ratio R was 1.5.

Example C3

(1) Preparation of catalyst component

A catalyst component was prepared in the same way as in Example C1 except that 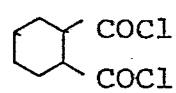 was used instead of ortho-$C_6H_4(COCl)_2$. The Ti content of the resulting catalyst component was 3.43 % by weight.

(2) Polymerization of propylene

The polymerization procedures in Example C1 were repeated except that 43.4 mg of monophenyltrimethoxysilane was used instead of the diphenyldimethoxysilane. Thus, 83.6 g of polymer was obtained. The polymer had the following values: T-I.I. = 94.4 % by weight, MFR = 6.1 (g/10 min.), and bulk specific gravity of the polymer = 0.427 (g/cc). The ratio R was 1.6.

WHAT IS CLAIMED IS:

1. A catalyst component for polymerizing olefins, characterized by a contact product of the following components ($A_1$), ($A_2$) and ($A_3$):

component ($A_1$): a contact product of, as essential components, a magnesium dihalide, a titanium tetraalkoxide and/or a polymer thereof, and a polymeric silicone compound having the structure represented by the formula:

$$\begin{array}{c} R^1 \\ | \\ -Si-O- \\ | \\ H \end{array}$$

(wherein $R^1$ denotes a hydrocarbon residue),

component ($A_2$): an acid-halogen compound, and

component ($A_3$): a liquid titanium compound (component (a)) and/or a halogenosilicon compound (component (b)), provided that the component (a) contains a halogen when the component (a) is used alone.

2. The catalyst component according to Claim 1, wherein the component ($A_3$) is a liquid halogenosilicon compound.

3. The catalyst component according to Claim 1, wherein the component ($A_3$) is a liquid titanium compound containing a halogen.

4. The catalyst component according to Claim 1, wherein the component ($A_3$) consists of a liquid titanium compound as the component (a) and a halogenosilicon compound as the component (b).

5. The catalyst component according to Claim 4, wherein each of the component (a) and the component (b) is used in such an amount as to give the atomic ratios of titanium and silicon, respectively, to the magnesium compound constituting the component ($A_1$) in

the range of 0.1 to 10.

6. A catalyst for polymerizing olefins, characterized by a combination of the following components (A) and (B):

component (A): the catalyst component for polymerizing olefins as defined in any one of the preceding claims, and

component (B): an organoaluminum compound.

7. A process for polymerizing olefins which comprises contacting an olefin with a catalyst consisting essentially of the following components (A) and (B):

component (A): the catalyst component for polymerizing olefins as defined in any one of the preceding claim, and

component (B): an organoaluminum compound; thereby to polymerize the olefin.